## Europäisches Patentamt

(19) **European Patent Office**

**Office européen des brevets**

(11) Veröffentlichungsnummer: **0 044 903**
**B1**

(12) **EUROPÄISCHE PATENTSCHRIFT**

(45) Veröffentlichungstag der Patentschrift:
29.05.85

(51) Int. Cl.⁴: **C 01 B 33/18**

(21) Anmeldenummer: **81102147.6**

(22) Anmeldetag: **21.03.81**

(54) Verfahren und Vorrichtung zur pyrogenen Herstellung von Siliciumdioxid.

(30) Priorität: **26.07.80 DE 3028364**

(43) Veröffentlichungstag der Anmeldung:
**03.02.82 Patentblatt 82/5**

(45) Bekanntmachung des Hinweises auf die Patenterteilung:
**29.05.85 Patentblatt 85/22**

(84) Benannte Vertragsstaaten:
**AT BE CH DE FR GB IT LI LU NL SE**

(56) Entgegenhaltungen:
**FR - A - 1 152 554**
**FR - A - 2 098 145**
**LU - A - 81 909**
**US - A - 3 086 851**

**THE CHEMISTRY OF SILICA, RALPH K ILER, WILEY &
SONS, NEW YORK, SEITEN 566-568**

(73) Patentinhaber: **Degussa Aktiengesellschaft,
Weissfrauenstrasse 9, D-6000 Frankfurt am Main 1 (DE)**

(72) Erfinder: **Schwarz, Rudolf, Dr., Taunusstrasse 2,
D-8755 Alzenau (DE)**
Erfinder: **Kleinschmit, Peter, Dr., Wildaustrasse 19,
D-6450 Hanau 9 (DE)**

## Beschreibung

Es ist bekannt, auf pyrogenem Wege Siliciumdioxid herzustellen, indem man Siliciumhalogenide in einer Flamme hydrolysiert, die durch Verbrennen von Wasserstoff oder Methan in Gegenwart von Sauerstoff erzeugt wird (vgl. US-A-3 086 851). Diese Brennstoffe weisen den Nachteil auf, daß sie relativ teuer und nicht immer verfügbar sind.

Die FR-A-1 152 554 und die FR-A-2 098 145 beschreiben Verfahren zur pyrogenen Herstellung von Siliciumdioxid, bei welchem Siliciumfluorverbindungen mit Wasserdampf verdünnt und in einer CO-Flamme verbrannt werden.

Die LU-A-81 909 beschreibt ein Verfahren zur Herstellung von Kieselsäure mittels Flammenhydrolyse wobei man in das Reaktionsgemisch zusätzliche Mengen an Wasserdampf, welche nicht aus der Verbrennung von für die Flammenhydrolyse notwendigen Wasserstoff enthaltenden Gasen resultieren, einführt.

Bei der Herstellung von pyrogenem Siliciumdioxid aus Chlorsilan wird in »The Chemistry of Silica« — Ralph K. Iler, Wiley & Sons, New York, Seite 566 vorgeschlagen, Wasserstoff durch Methan als Brenngas zu ersetzen.

Gegenstand der Erfindung ist ein Verfahren zur pyrogenen Herstellung von Siliciumdioxid, wobei man eine oder mehrere flüchtige Siliciumverbindungen aus der Gruppe der Chlorsilane und Organochlorsilane verdampft, mit Luft oder sauerstoffhaltigem Gas, Brenngas und Wasserdampf vermischt und dieses Gasgemisch verbrennt, welches dadurch gekennzeichnet ist, daß man als Brenngas ein kohlenoxidhaltiges Gas verwendet.

In einer bevorzugten Ausführungsform der Erfindung kann als flüchtige Siliciumverbindung Siliciumtetrachlorid eingesetzt werden.

Als kohlenoxidhaltiges Gas kann man Kohlenmonoxid/Kohlendioxid-Gemisch und/oder Abgas einer Verbrennung von Kohle gegebenenfalls in Mischung mit Stickstoff verwenden.

In einer Variante des erfindungsgemäßen Verfahrens kann man reines Kohlenmonoxid als Energieträger zusammen mit einer für die Hydrolyse des Silans ausreichenden Menge an Wasserdampf verwenden.

Als Kohlenoxidhaltiges Gas kann weiterhin ein Gas verwendet werden, welches Kohlenmonoxid, Kohlendioxid und Stickstoff enthält und einem Heizwert von mindestens 1000 Kcal/m$^3$ aufweist.

In einer anderen Ausführungsform der Erfindung kann man als kohlenoxidhaltiges Gas das heiße Abgas aus einer unvollständigen Kohlenverbrennung verwenden.

Als kohlenoxidhaltiges Gas kann man weiterhin Generatorgas der Zusammensetzung 30±5 Vol.-% Kohlenmonoxid, 5±5 Vol.-% Kohlendioxid, 55±5 Vol.-% Stickstoff und 10±5 Vol.-% Wasserdampf verwenden.

Die Luft kann auf eine Temperatur von Raumtemperatur bis 250, vorzugsweise von 20°C bis 200°C vorgewärmt sein.

Der Wasserdampf kann auf eine Temperatur von 100 bis 600°C vorgewärmt sein. In einer Variante des erfindungsgemäßen Verfahrens kann man die Ausgangsstoffe, insbesondere den Wasserdampf auf eine Temperatur erhitzen, die ausreicht, um die flüchtige Siliciumverbindung vollständig zu hydrolysieren.

Gemäß der vorliegenden Erfindung wurde gefunden, daß man feinstteiliges Siliciumoxid durch Hydrolyse bei Temperaturen über 500°C, vorzugsweise in Flammen herstellen kann, wenn man von einem praktisch wasserstofffreien Kohlenoxid haltigem Gas in Kombination mit einer für die Hydrolyse der Metallverbindungen ausreichenden Menge Wasserdampf ausgeht. Vorteilhafterweise verwendet man dabei Kohlenmonoxid, dem man die Siliciumverbindung und eine für die Verbrennung des Kohlenmonoxids ausreichenden Menge Luft oder eines Sauerstoff enthaltenden Gases vor der Verbrennung zumischt. Das Gasgemisch läßt man in einem Brenner abbrennen. Dem Kohlenmonoxid können auch mehr oder minder große Anteile Kohlendioxid beigemischt sein, ohne daß der Reaktionsverlauf der Flammenhydrolyse dadurch beeinträchtigt wird. Das heißt, das Kohlenmonoxid kann z. B. unmittelbar aus einer unvollständigen Kohlenverbrennung stammen. In diesem Falle enthält das Heizgas zusätzlich zu den Anteilen Kohlendioxid zum Teil noch beträchtliche Anteile Stickstoff, die von der Verbrennung der Kohle mit Luft, die fast 80% Stickstoff enthält, herrühren. Der geringe Feuchtigkeitsgehalt der Kohle oder der Luft stört nicht, da bei geeigneten Verbrennungsbedingungen der Kohle dieser geringe Wasseranteil entweder unter der Bildung von Kohlenmonoxid und geringen Mengen Wasserstoff umgesetzt und mit den anderen Heizgasen der Flamme zugeführt wird oder andernfalls in dieser Form zu der Hydrolyse des Metallhalogenids beiträgt. Als Brennervorrichtung kann man bekannte Brennervorrichtungen verwenden, wie sie z. B. in der US-A-3 086 851 beschrieben werden.

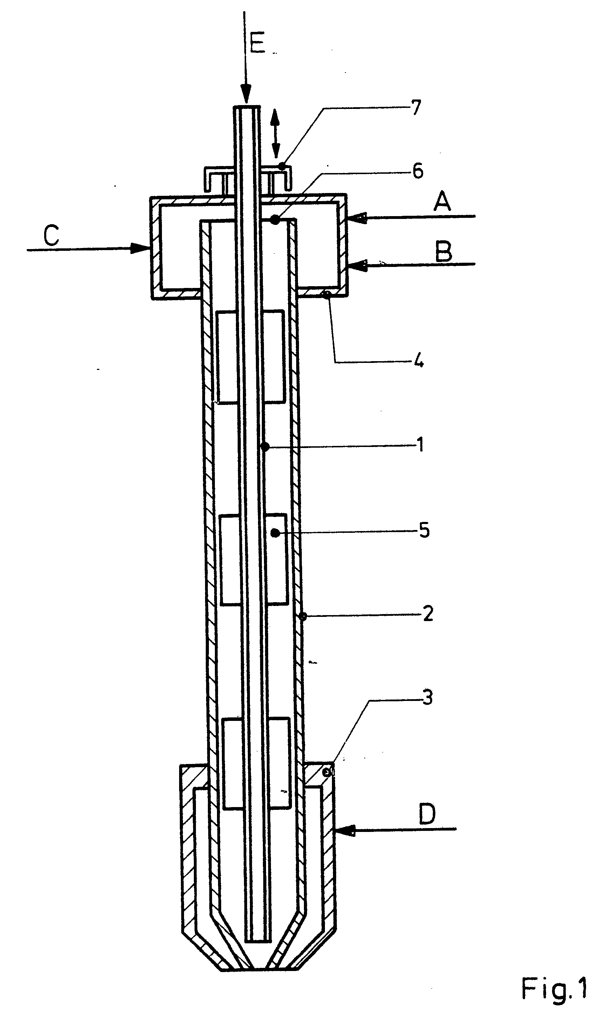

In einer weiteren Ausführungsform der Erfindung kann man mit einem Gas oder Gasgemisch, das aus Verbrennung von Kohle stammt und selbst kein Kohlenmonoxid oder ein anderes brennbares Gas mehr enthält, aber eine für eine Hydrolyse von Siliciumverbindungen ausreichende Temperaturen besitzt, in Kombination mit einer für die Hydrolyse ausreichenden Menge Wasserdampf ebenfalls Siliciumdioxid herstellen. In diesem speziellen Falle ist es allerdings nicht möglich, die heißen Gase, den Wasserdampf und die Siliciumverbindung gleichzeitig außerhalb oder innerhalb eines Brenners vorzumischen, da es dabei bereits zu einer Hydrolyse der Siliciumverbindung kommen würde. Sofern man die Hydrolysereaktion in einem Brenner mit axialer Einführung der Drittkomponente gemäß Figur 1 durchführt, kann man eine der drei Komponenten erst an der Brenneraustrittsöffnung oder unmittelbar davor den übrigen beiden zumischen. Man kann dabei so vorgehen, daß man die heißen Gase aus der Kohlenverbrennung in einer Vorkammer des Brenners mit der verdampften Siliciumverbindung homogen mischt und den Wasserdampf an der Brennermündung zuspeist. In einer vorteilhaften Ausführung kann man eine Vormischung des Wasserdampfes mit den heißen Abgasen der Kohleverbrennung und die Einmischung der dampfförmigen Siliciumverbindung am Brennermundstück durchführen. Erfindungsgemäß kann man das Gasgemisch in einer Brennervorrichtung zur Herstellung von Siliciumdioxid verbrennen, die aus einer Lanze (1), einem Mantelrohr (2), einer Ringdüse (3), einer Mischkammer (4) und Lamminierungsrippen (5) besteht, wobei die Mischkammer (4) mit dem Mantelrohr (2) über den Durchtritt (6) verbunden und die Ringdüse (3) konzentrisch um das Mantelrohr (2), die Mischkammer (4) konzentrisch um das Mantelrohr (2), das Mantelrohr (2) konzentrisch um die Lanze (1) und die Lanze (1) in der Dichtung (7) verschiebbar angeordnet sind.

Ein weiterer Gegenstand der Erfindung ist eine Brennervorrichtung zur Herstellung von Siliciumdioxid bestehend aus konzentrisch angeordneten Rohren, welches dadurch gekennzeichnet ist, daß sie aus einer Lanze (1), einem Mantelrohr (2), einer Ringdüse (3), einer Mischkammer (4) und Lamminierungsrippen (5) besteht, wobei die Mischkammer (4) mit dem Mantelrohr (2) über den Durchtritt (6) verbunden und die Ringdüse (3) konzentrisch um das Mantelrohr (2), die Mischkammer (4) konzentrisch um das Mantelrohr (2), das Mantelrohr (2) konzentrisch um die Lanze (1) und die Lanze (1) in der Dichtung (7) verschiebbar angeordnet sind.

Die erfindungsgemäße Brennervorrichtung ist in der Fig. 1 schematisch dargestellt. Gemäß der Fig. 1 bezeichnen die Buchstaben A, B, C, D und E die verschiedenen Gaseinlasse.

Weiterhin kann man eine Reaktionskammer verwenden, in die alle Reaktionskomponenten getrennt eingeführt werden und die einen gemeinsamen Ausgang für das gebildete Siliciumdioxid, den Halogenwasserstoff, den Wasserdampfüberschuß und gegebenenfalls Stickstoff hat. Die getrennten Zuführungen können konzentrisch, z. B. als Ringspalte, ausgeführt sein. Die Reaktionsprodukte werden auf bekannte Weise auf Temperatur unter 300° C abgekühlt. Dann wird in Filtern bekannter Bauart das Siliciumdioxid von den übrigen Reaktionsgasen, im wesentlichen Halogenwasserstoff, Kohlendioxid, Stickstoff und überschüssiger Wasserdampf, abgetrennt und das Siliciumdioxid, gegebenenfalls durch eine Wasserdampfbehandlung bei erhöhter Temperatur zur Entfernung von anhaftendem Halogenwasserstoff in einer Apparatur gemäß DE-C-1 163 784 behandelt.

Das erfindungsgemäße Verfahren weist den Vorteil auf, daß es dort anwendbar ist, wo Industrieabgase in großen Mengen zur Verfügung stehen. Auf die Verwendung des teuren Wasserstoffes kann dann verzichtet werden.

Beispiel 1

2,33 Liter Siliciumtetrachlorid werden pro Stunde verdampft und mit 3,37 m³/h Luft verdünnt. Diese Mischung wird in die Vorkammer des bekannten Brenners eingeblasen und dort mit 1,21 m³/h CO und 1 kg/h Wasserdampf von ca. 150°C vermischt. Die 4-Komponenten-Mischung strömt aus der Brennermündung mit einer Geschwindigkeit von ca. 10 m/sec aus und brennt dort als Flamme ab.

Die Flamme wird in ein Kühlsystem geleitet. Dort werden die Reaktionsprodukte bis auf eine Temperatur von ca. 150° abgekühlt. Die erhaltene Kieselsäure (1,2 kg/h) wird bei dieser Temperatur von den $HCl/H_2O$-haltigen Abgasen getrennt und durch Nachbehandlung mit Wasserdampf bei 600°C von anhaftendem Chlorwasserstoff befreit. Die spezifische Oberfläche der Kieselsäure beträgt 288 m³/g.

Beispiel 2

3,82 Liter Siliciumtetrachlorid werden pro Stunde verdampft und mit 5,52 m³/h Luft verdünnt. Die Mischung wird gemäß Beispiel 1 in den bekannten Brenner geleitet und dort mit 1,98 m³/h Kohlenmonoxid und 1,54 kg/h Wasserdampf vermischt. Die Ausströmgeschwindigkeit der Gasmischung aus der Brennermündung beträgt ca. 16 m/sec. Nach der Zündung dieses Gemisches brennt die Flamme in das Kühlsystem. Nach der Abkühlung der Reaktionsprodukte können 1,95 kg/h einer pyrogenen Kieselsäure mit einer BET-Oberfläche von 257 m²/g abgetrennt werden.

Beispiel 3

2,33 Liter Siliciumtetrachlorid werden pro Stunde verdampft mit 2,76 m³ Luft, die auf 180° C erhitzt ist, verdünnt und in die Mischkammer des bekannten Brenners, eingeleitet. Zusätzlich werden in die Mischkammer 1 kg Dampf von 150° C und ein brennbares Gasgemisch, bestehend aus 0,97 m³ Kohlenmonoxid, 0,24 m³ Kohlendioxid und 0,5 m³ Stickstoff, eingeleitet. Die Temperatur dieses brennbaren Gasgemisches beträgt 210°C. Die Ausströmgeschwindigkeit aus der Brennermündung beträgt 12 m/sec. Die an der Brennermündung abbrennende Reaktionsmischung wird in das Kühlsystem eingeleitet und gemäß Beispiel 1 weiterbehandelt. Es werden 1,2 kg/h pyrogenes Siliciumdioxid mit einer Oberfläche nach BET von 240 m²/g erhalten.

### Beispiel 4

In die Mischkammer eines Brenners, wie er in Fig. 1 gezeigt ist, werden über Gaseinlaß A 0,34 Nm³/h Luft von 500° C und über Gaseinlaß B ein heißes Abgas einer Temperatur von 1420° C, bestehend aus 1,21 Nm³/h $CO_2$ und 2,42 Nm³/h $N_2$ eingeleitet. Durch Gaseinlaß C werden 1 kg/h Wasserdampf, der mit üblichen Mitteln auf 500° C erhitzt ist, eingeblasen. Nach der Brennermündung wird in die Achse des heißen, aus dem Brenner (Einlaß E) ausströmenden Gas-Dampfgemisches Siliciumtetrachloriddampf eingeblasen, den man durch Verdampfen von 2,33 Liter $SiCl_4$/h in einem getrennten Verdampfer und durch Überhitzen auf 200° C erhalten hat. Der Abstand der Brennermündung von der Öffnung des Kühlsystems, in welche die Reaktionsprodukte zusammen mit 3,2 m³ kalter Luft eingesaugt werden, beträgt ca. 25 cm. Die weitere Behandlung erfolgt wie in Beispiel 1 beschrieben. Es werden durch Abtrennung von den Reaktionsgasen 1,2 kg feinteilige Kieselsäure einer BET-Oberfläche von 160 m²/g erhalten.

### Beispiel 5

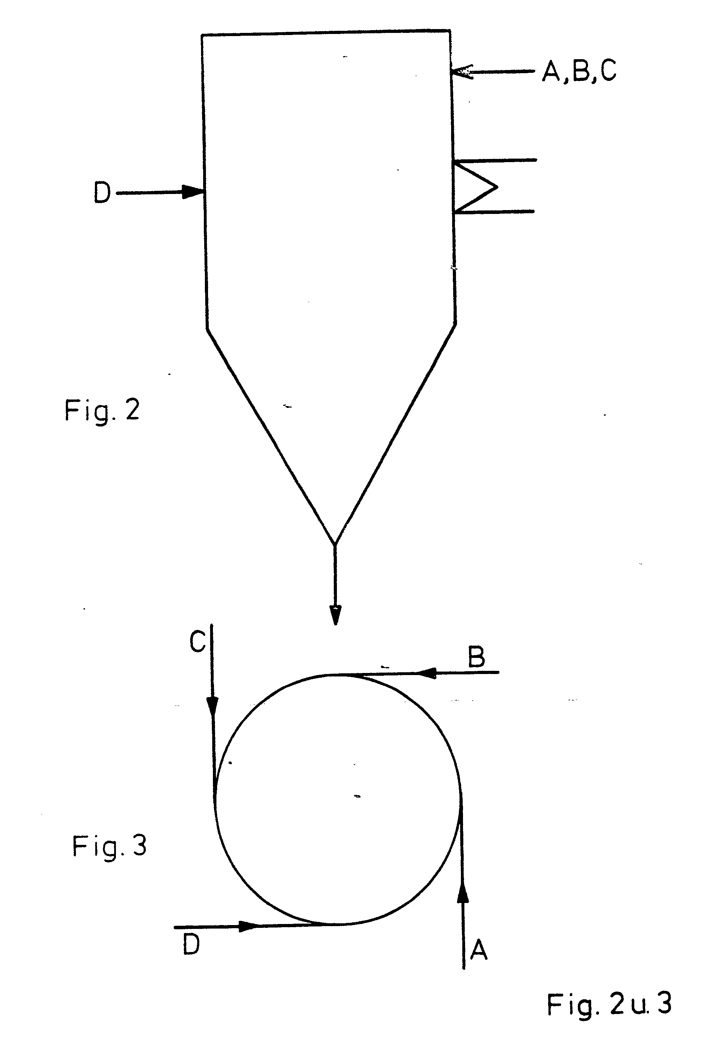

Sämtliche Reaktionskomponenten des Beispiels 5, der überhitzte Wasserdampf, die vorerhitzte Luft, der Siliciumtetrachloriddampf und die heißen Abgase, bestehend aus Kohlendioxid und Stickstoff werden getrennt tangential in eine Reaktionskammer eingeführt (Fig. 2 und Fig. 3). Die Gase bzw. Dämpfe werden nach der Vermischung und Reaktion in einem geeigneten Abstand von dem Reaktionsort durch Einblasen von 5 m³/h Kaltluft bei D teilweise abgekühlt. Die aus der Reaktionskammer austretenden vorgekühlten Reaktionsgase werden nach Überführung in ein Kühlsystem, wie unter Beispiel 1 beschrieben, weiterbehandelt. Die durch Abtrennung erhaltene Kieselsäure besitzt eine Oberfläche nach BET von 185 m²/g.

### Patentansprüche

1. Verfahren zur pyrogenen Herstellung von Siliciumdioxid, wobei man eine oder mehrere flüchtige Siliciumverbindungen aus der Gruppe der Chlorsilane und Organochlorsilane verdampft, mit Luft oder sauerstoffhaltigem Gas, Brenngas und Wasserdampf vermischt und dieses Gasgemisch verbrennt, dadurch gekennzeichnet, daß man als Brenngas ein kohlenoxidhaltiges Gas verwendet.

2. Verfahren nach Anspruch 1, dadurch gekennzeichnet, daß man reines Kohlenmonoxid als Energieträger zusammen mit einer für die Hydrolyse des Silans ausreichenden Mengen an Wasserdampf verwendet.

3. Verfahren nach Anspruch 1, dadurch gekennzeichnet, daß man als Kohlenoxid-haltiges Gas ein Gas enthaltend Kohlenmonoxid, Kohlendioxid und Stickstoff mit einem Heizwert von mindestens 1000 Kcal/m³ verwendet.

4. Verfahren nach Anspruch 3, dadurch gekennzeichnet, daß man als Kohlendioxid-haltiges Gas das heiße Abgas aus einer unvollständigen Kohlenverbrennung verwendet.

5. Verfahren nach Anspruch 3, dadurch gekennzeichnet, daß man als Kohlenoxidhaltiges Gas Generatorgas der Zusammensetzung 30±5 Vol.-% Kohlenmonoxid, 5±5 Vol.-% Kohlendioxid, 55±5 Vol.-% Stickstoff und 10±5 Vol.-% Wasserstoff verwendet.

6. Verfahren nach Anspruch 1, dadurch gekennzeichnet, daß man die Ausgangsstoffe , insbesondere den Wasserdampf, auf eine Temperatur vorerhitzt, die ausreicht, um die flüchtige Siliciumverbindung vollständig zu hydrolysieren.

7. Verfahren nach Anspruch 1, dadurch gekennzeichnet, daß man das Gasgemisch in einer Brennervorrichtung verbrennt, die aus einer Lanze (1), einem Mantelrohr (2), einer Ringdüse (3), einer Mischkammer (4) und Lamminierungsrippen (5) besteht, wobei die Mischkammer (4) mit dem Mantelrohr (2) über den Durchtritt (6) verbunden und die Ringdüse (3) konzentrisch um das Mantelrohr (2), die Mischkammer (4) konzentrisch um das Mantelrohr (2), das Mantelrohr (2) konzentrisch um die Lanze (1) und die Lanze (1) in der Dichtung (7) verschiebbar angeordnet sind.

8. Brennervorrichtung zur Herstellung von Siliciumdioxid, bestehend aus konzentrisch angeordneten Rohren, dadurch gekennzeichnet, daß sie aus einer Lanze (1), einem Mantelrohr (2), einer Ringdüse (3), einer Mischkammer (4) und Lamminierungsrippen (5) besteht, wobei die Mischkammer (4) mit dem Mantelrohr (2) über den Durchtritt (6) verbunden und die Ringdüse (3) konzentrisch um das Mantelrohr (2), die Mischkammer (4) konzentrisch um das Mantelrohr (2), das Mantelrohr (2) konzentrisch um die Lanze (1) und die Lanze (1) in der Dichtung (7) verschiebbar angeordnet sind.

### Claims

1. A process for the pyrogenic production of silicon dioxide by vaporising one or more volatile silicon compounds from the group of chlorosilanes and organochlorosilanes, mixing with air or oxygen-containing gas, fuel gas and steam and combusting this gas mixture, characterised in that a carbon monoxide-containing gas is used as fuel gas.

2. A process according to claim 1, characterised in that pure carbon monoxide is used as energy carrier, together with a sufficient quantity of steam for hydrolysing the silane.

3. A process according to claim 1, characterised in that a gas containing carbon monoxide, carbon dioxide and nitrogen having a minimum calorific value of 1000 Kcal/m³ is used as carbon monoxide-containing gas.

4. A process according to claim 3, characterised in that hot waste gas from the incomplete combustion of carbon is used as carbon monoxide-containing gas.

5. A process according to claim 3, characterised in that generator gas containing $30\pm5\%$ by volume of carbon monoxide, $5\pm5\%$ by volume of carbon dioxide, $55\pm5\%$ by volume of nitrogen and $10\pm5\%$ by volume of hydrogen are used as carbon monoxide-containing gas.

6. A process according to claim 1, characterised in that the starting materials, particularly the steam, is pre-heated to a temperature sufficient to completely hydrolyse the volatile silicon compound.

7. A process according to claim 1, characterised in that the gas mixture is combusted in a burner apparatus consisting of a lance (1), a tubular sheath (2), an annular nozzle (3), a mixing chamber (4) and laminating ribs (5), the mixing chamber (4) being connected to the tubular sheath (2) via passage (6) and the annular nozzle (3) being arranged concentrically about the annular sheath (2), the mixing chamber (4) being arranged concentrically about the lance (1) and the lance (1) being displacable in the seal (7).

8. A burner apparatus for the production of silicon dioxide consisting of concentrically-arranged pipes, characterised in that it consists of a lance (1), a tubular sheath (2), an annular nozzle (3), a mixing chamber (4) and laminating ribs (5), the mixing chamber (4) being connected to the tubular sheath (2) via the passage (6) and the annular nozzle (3) being arranged concentrically about the tubular sheath (2), the mixing chamber (4) being arranged concentrically about the tubular sheath (2), the tubular sheath (2) being arranged concentrically about the lance (1) and the lance (1) being displacable in the seal (7).

## Revendications

1. Procédé pour la fabrication par pyrogénation de dioxyde de silicium où l'on fait évaporer un ou plusieurs composés volatils du silicium, du groupe des chlorosilanes et organochlorosilanes, les mélange avec de l'air ou un gaz vontenant de l'oxygène, un gaz combustible et de la vapeur d'eau, et fait brûler ce mélange, procédé caractérisé en ce qu'on utilise, comme gaz combustible, un gaz contenant de l'oxyde de carbone.

2. Procédé suivant la revendication 1, caractérisé en ce que l'on utilise, comme apporteur d'énergie, le monoxyde de carbone, en commun avec une quantité de vapeur d'eau suffisante pour l'hydrolyse du silane.

3. Procédé suivant la revendication 1, caractérisé en ce que comme gaz contenant de l'oxyde de carbone, on utilise un gaz contenant du monoxyde de carbone, du dioxyde de carbone et de l'azote ayant une valeur calorifique d'au moins 1000 Kcal/m³.

4. Procédé suivant la revendication 3, caractérisé en ce que, comme gaz contenant de l'oxyde de carbone, on utilise les gaz perdus chauds provenant de la combustion incomplète du charbon.

5. Procédé suivant la revendication 3, caractérisé en ce que l'on utilise, comme gaz contenant de l'oxyde de carbone, du gaz de générateur dont la composition est $30\pm5$ vol.-% de monoxyde de carbone, $5\pm5$ vol.-% de dioxyde de carbone, $55\pm5$ vol.-% d'azote et $10\pm5$ vol.-% d'hydrogène.

6. Procédé suivant la revendication 1, caractérisé en ce que l'on préchauffe les matières de départ, notamment la vapeur d'eau à une température qui suffit pour hydrolyser complètement le composé volatil du silicium.

7. Procédé suivant la revendication 1, caractérisé en ce que l'on brûle le mélange de gaz dans un dispositif de brûleur qui est constitué d'une lance (1), d'une enveloppe tubulaire (2), d'une buse annulaire (3), d'une chambre mélangeuse (4), et de nervures de laminage (5), la chambre mélangeuse (4) étant reliée avec l'enveloppe tubulaire (2) par le passage (6), et la buse annulaire (3) étant disposée concentriquement à l'enveloppe tubulaire (2), la chambre mélangeuse (4), concentriquement à l'enveloppe tubulaire (2), l'enveloppe tubulaire (2) concentriquement à la lance (1), et la lance (1) étant mobile dans le joint d'étanchéité (7).

8. Dispositif de brûleur pour la fabrication du dioxyde de silicium, constitué de tubulures disposées concentriquement, caractérisé en ce qu'il est constitué d'une lance (1), d'une enveloppe tubulaire (2), d'une buse annulaire (3), d'une chambre mélangeuse (4) et de nervures de laminage (5), où la chambre mélangeuse (4) communique avec l'enveloppe tubulaire (2) par le passage (6) et où la buse annulaire (3) est disposée concentriquement autour de l'enveloppe tubulaire (2), la chambre mélangeuse (4) concentriquement à l'enveloppe tubulaire (2), l'enveloppe tubulaire (2), concentriquement à la lance (1) et la lance (1), mobile dans la garniture (7).

Fig.1

Fig. 2

Fig. 3

Fig. 2 u. 3